**Europäisches Patentamt**

**European Patent Office**

**Office européen des brevets**

(19)

(11) Veröffentlichungsnummer: **0 058 760**
**B1**

(12) # EUROPÄISCHE PATENTSCHRIFT

(45) Veröffentlichungstag der Patentschrift:
**29.01.86**

(51) Int. Cl.⁴: **H 04 Q 11/04,** H 04 L 11/00

(21) Anmeldenummer: **81109271.7**

(22) Anmeldetag: **29.10.81**

(54) **Schaltungsanordnung zum Verbinden von Analog-Signale abgebenden Sendeeinrichtungen mit Analog-Signale aufnehmenden Empfangseinrichtungen über eine Zeitmultiplex-Datenvermittlungsanlage.**

(30) Priorität: **25.02.81 DE 3107046**

(43) Veröffentlichungstag der Anmeldung:
**01.09.82 Patentblatt 82/35**

(45) Bekanntmachung des Hinweises auf die Patenterteilung:
**29.01.86 Patentblatt 86/5**

(84) Benannte Vertragsstaaten:
**AT CH IT LI SE**

(56) Entgegenhaltungen:
**DE - A - 2 907 867**

**TELCOM REPORT, Band 3, Heft 6, 1980 MÜNCHEN (DE)
K. GOSSLAU et al.: "Siemens System EDS- jetzt aich für
64kbit/s" Seiten 439/440
TELCON REPORT, Band 2, Beiheft
"Digital-Übertragungstechnik" 1979 MÜNCHEN (DE) C.
EHRICKE et al.: "Kennzeichenumsetzer zur
Übertragung vermittlungstechnischer Zeichen in
Digital-Fernsprechverbindungen" Seiten 65-71
TELCOM REPORT, Band 2, Heft 2, 1979 MÜNCHEN (DE)
R. NAESSL et al.: "Das Siemens-System EDS in
synchronen Datennetzen" Seiten 111-115
REVIEW OF THE ELECTRICAL COMMUNICATION
LABORATORIES, Band 28, Heft 5-6, Mai-Juni 1980
TOKYO (JP) R. NAKAMURA et al.: "Digital Data Circuit
Switching System" Seiten 323-327**

(73) Patentinhaber: **Siemens Aktiengesellschaft, Berlin und
München Wittelsbacherplatz 2, D-8000 München 2 (DE)**

(72) Erfinder: **Naessl, Robert, Dipl.-Ing., Am Hohem Weg 29,
D-8081 Kottgeisering (DE)**

## Beschreibung

Die Erfindung bezieht sich auf eine Schaltungsanordnung, wie sie im Oberbegriff des Patentanspruchs 1 angegeben ist.

Auf dem Gebiet der Fernsprechtechnik ist es bereits bekannt, (Zeitschrift «telcom report» 2 (1979), Heft 4, Seiten 254 bis 261), sogenannte Analognetze mit sogenannten Digitalnetzen zu verbinden. Unter einem Analognetz wird dabei ein Vermittlungsnetz verstanden, in welchem Informationen in Form von analogen Signalen übertragen und vermittelt werden. Unter einem Digitalnetz wird hingegen ein Fernmeldenetz verstanden, in welchem Signale in digitaler Form übertragen und vermittelt werden. An den Verbindungsstellen zwischen den beiden Fernmeldenetzen sind Analog-Digital- und Digital-Analog-Wandler vorgesehen. Dadurch ist es zwar möglich, vom Analognetz in das Digitalnetz und umgekehrt vom Digitalnetz in das Analognetz Signale zu übertragen. Die Durchführung der vermittlungstechnischen Aufgaben setzt dabei jedoch voraus, dass die Signalisierungsinformationen in beiden Fernmeldenetzen einander entsprechen. Diese Forderung kann jedoch nicht immer erfüllt werden. Um eine zuweilen erforderliche Umsetzung der Signalisierungsinformationen vorzunehmen, können sogenannte Operationsmoduln eingesetzt werden, die mit dem digitalen Koppelnetz einer zu dem Digitalnetz gehörenden Vermittlungsstelle verbunden sind. Obwohl durch derartige Operationsmoduln ein unmittelbarer Eingriff in die Steuerung der betreffenden Vermittlungsstelle vermieden ist, ist dennoch ein nicht unerheblicher schaltungstechnischer Aufwand mit dieser Lösung verbunden.

Im Zusammenhang mit dem Vermitteln von mit relativ hoher Geschwindigkeit (64 kbit/s) auftretenden digitalen Datensignalen ist es bereits bekannt (Zeitschrift «telcom report», 3 (1980), Heft 6, Seiten 439, 440), eine bereits vorhandene Zeitvielfach-Datenvermittlungsanlage hinsichtlich ihrer Koppeleinrichtungen und ihrer Software so auszugestalten, dass Informationskanäle mit bitfolgeunabhängiger 64-kbit/s-Durchschaltung im Duplexverfahren und zusätzliche sogenannte mittelschnelle Kanäle für die Übertragung von Signalisierungsinformationen bereitstehen. Die zuletzt erwähnten Kanäle dienen dabei der sogenannten out-slot-Signalisierung und der end-toend-Übertragung von Steuersignalen, die zwischen einzelnen miteinander zu verbindenden bzw. verbundenen Teilnehmerstellen auszutauschen sind.

Es ist nun auch schon eine PCM-Vermittlungsanlage bekannt (DE-A 2 907 867), die u.a. ein Nutzkoppelfeld und ein Singalkoppelfeld aufweist. Die beiden Koppelfelder sind über Signalverbindungsleitungen miteinander verbunden. An dem Nutzkoppelfeld sind sowohl analoge Teilnehmerstellen und analoge Verbindungsleitungen als auch digitale Teilnehmerstationen anschliessbar. Die analogen Teilnehmerstationen und Verbindungsleitungen sind dabei zu Gruppen zusammengefasst jeweils über einen Wandler an das Nutzkoppelfeld angeschlossen. Diesem Nutzkoppelfeld werden von dem betreffenden Wandler sowohl die in digitale umgesetzten Nachrichtensignale als auch die in digitale Signale umgesetzten Signalisierungsinformationen zugeführt. Die betreffenden Signalisierungsinformationen werden von dem Nutzkoppelfeld her dem Signalkoppelfeld zugeführt. Dies bedeutet aber, dass bei der betrachteten bekannten PCM-Vermittlungsanlage das Nutzkoppelfeld sowohl die üblicherweise mit relativ hoher Geschwindigkeit auftretenden Nachrichtensignale als auch die mit relativ niedriger Geschwindigkeit auftretenden Signalisierungsinformationen aufnimmt und dann eine Trennung dieser Signale vornimmt. Damit weist aber die betreffende bekannte PCM-Vermittlungsanlage neben dem Nachteil eines relativ hohen schaltungstechnischen Aufwands den weiteren Nachteil einer relativ hohen Belastung des Nutzkoppelfeldes auf.

Der Erfindung liegt nun die Aufgabe zugrunde, einen Weg zu zeigen, wie bei einer Schaltungsanordnung, von der im Oberbegriff das Patentanspruchs 1 ausgegangen wird, auf relativ einfache Weise Analog-Signale abgebende Sendeeinrichtungen mit Analog-Signale aufnehmenden Empfangseinrichtungen über eine Zeitmultiplex-Datenvermittlungsanlage, also über eine Digital-Signale aufnehmende und abgebende Vermittlungsanlage verbunden werden können. Gelöst wird die vorstehend aufgezeigte Aufgabe durch die im Patentanspruch 1 gekennzeichnete Schaltungsanordnung.

Die Erfindung bringt den Vorteil mit sich, dass mit relativ geringem schaltungstechnischen Aufwand ausgekommen werden kann, um Analog-Signale abgebende Sendeeinrichtungen mit Analog-Signale aufnehmenden Empfangseinrichtungen über eine digital arbeitende Zeitmultiplex-Datenvermittlungsanlage zu verbinden. Dabei braucht in diese Zeitmultiplex-Datenvermittlungsanlage überhaupt nicht eingegriffen zu werden. Vielmehr genügt es, durch die lediglich extern bereitzustellenden Multiplexer/Demultiplexer-Umsetzeinrichtungen und die Signalumsetzungsanordnung die gewünschten Verbindungen herzustellen. Dabei kann in vorteilhafter Weise mit kommerziell bereits erhältlichen Geräten für die erwähnten Umsetzeinrichtungen bzw. für die Signalumsetzungsanordnung ausgekommen werden.

Zweckmässigerweise enthält die Signalumsetzungsanordnung eine durch wenigstens einen Mikroprozessor gesteuerte Signalaufnahme- und Signalabgabeschaltung, in der die von der jeweiligen Multiplexer/Demultiplexer-Umsetzeinrichtung bzw. von der Zeitmultiplex-Datenvermittlungsanlage abgegebenen Signalisierungsinformationen vor ihrer Weiterleitung in von der Zeitmultiplex-Datenvermittlungsanlage bzw. den mit der Multiplexer/Demultiplexer-Einrichtung verbundenen Empfangseinrichtungen verarbeitbare Signalisierungsinformationen umgesetzt werden. Hierdurch ergibt sich der Vorteil eines besonders einfachen und wirtschaftlichen Betriebs der gesamten Anlage für den Fall, dass im Bereich der Signalsender und Signalempfänger einerseits und im Bereich der Zeitmultiplex-Datenvermittlungsanlage andererseits mit Signalisierungsinformationen unterschiedlicher Arten gearbeitet wird. Handelt es sich bei den erwähnten Signalsendern und Signalempfängern beispielsweise um Analog-Fernsprechteilnehmer bzw. um eine solche Teilnehmerstellen enthaltende Vermittlungsstelle eines Analognetzes, so werden die in diesem Bereich benutzten Signalisierungsinformationen üblicherweise durch verschiedenartige Töne bzw. Tonkombinationen gebildet sein. Demgegenüber werden die Signalisierungsinformationen im Bereich der Zeitmultiplex-Datenvermittlungsanlage durch unterschiedliche Bitfolgen gebildet sein. Die zuvor erwähnte Signalumsetzungsanordnung gestattet es, die erforderliche Umsetzung der Singalisierungsinformationen vorzunehmen.

Vorzugsweise ist in der jeweiligen Signalaufnahme- und Signalabgabeschaltung wenigstens ein Speicher vorgesehen, in welchem die Zuordnungen zwischen den verschiedenen Signalisierungsarten zugehörigen Signalisierungsinformationen gespeichert sind. Dieser Speicher wird im Zuge der jeweiligen Signalisierungsumsetzung in einen Tabellensuchvorgang einbezogen, durch den der eine vorliegende Signalisierungsinformation enthaltende Speicherbereich ansteuerbar ist und durch den die in diesem Speicherbereich enthaltene, der betreffenden Signalisierungsinformation entsprechende andere Signalisierungsinformation für eine Weiterleitung bereitgestellt wird. Hierdurch ergibt sich der Vorteil einer ganz besonders einfachen Möglichkeit der Umsetzung der Signalisierungsinformationen.

Zweckmässigerweise ist mit der Signalumsetzungsanordnung eine Multiplexer/Demultiplexerschaltung verbunden, welche die in dem Signalisierungs-Zeitkanal zeitlich verschachtelt zugeführten, den einzelnen Signalsendern bzw. Signalempfängern zugehörigen Signalisierungsinformationen vor deren Umsetzung über einzelne Leitungen abgibt und ihr über einzelne Leitungen zugeführte umgesetzte Signalisierungsinformationen zeitlich verschachtelt über den Signalisierungs-Zeitkanal weiterleitet.Diese Schaltungsmassnahme bringt den Vorteil mit sich, dass der Aufbau und die Arbeitsweise der Signalumsetzungsanordnung relativ einfach werden.

Vorzugsweise umfassen die Nachrichten-Zeitkanäle und der Signalisierungs-Zeitkanal jeweils zwei Teilkanäle. Dies bringt den Vorteil mit sich, dass besonders einfach aufgebaute Multiplexer-Demultiplexer-Umsetzeinrichtungen und Signalumsetzungsanordnungen verwendet werden können.

Anhand von Zeichnungen wird die Erfindung nachstehend beispielsweise näher erläutert.

Fig. 1 zeigt in einem Blockdiagramm eine Zeitmultiplex-Datenvermittlungsanlage, über die Analog-Signale abgebende bzw. aufnehmende Sende-/Empfangseinrichtungen miteinander verbindbar sind.

Fig. 2 zeigt eine mögliche Ausführungsform einer Signalumsetzungsanordnung der in Fig. 1 dargestellten Anlage.

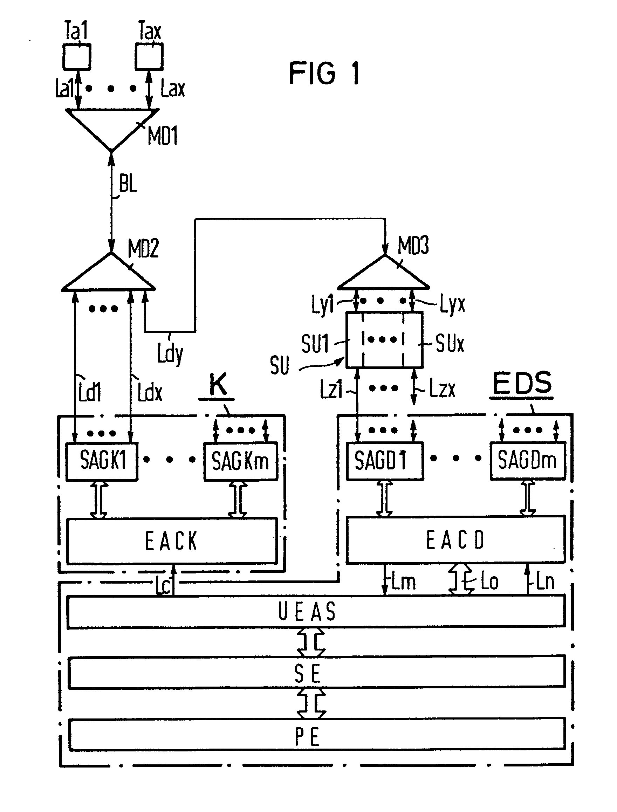

Die in Fig. 1 schematisch dargestellte Zeitvielfach-Datenvermittlungsanordnung EDS ist lediglich mit einer einzigen Gruppe von Anschlussschaltungen SAGD1 bis SAGDm dargestellt. Diese Anschlussschaltungen SAGD1 bis SAGDm dienen zur Aufnahme und Abgabe von auch als Envelopes bezeichneten Signalgruppen, die jeweils beispielsweise 6+2 oder 8+2 Bits aufweisen. Von diesen Bits bilden 6 bzw. 8 Bits die eigentlichen Datensignalbits, während die übrigen beiden Bits ein Statusbit bzw. ein Synchronisierbit darstellen. Die Anschlussschaltungen SAGD1 bis SAGDm sind so ausgelegt, dass sie pro Anschlussleitung Datensignale mit z.B. 2400 Bit/s zu verarbeiten vermögen. Üblicherweise weist jede der Anschlussschaltungen SAGD1 bis SAGDm 8 Anschlussleitungen auf.

Die Anschlussschaltungen SAGD1 bis SAGDm sind eingangs- und ausgangsseitig mit einem Eingabe-/Ausgabe-Codewandler EACD verbunden. Die Aufgabe dieses Codewandlers besteht unter anderem darin, über die einzelnen Anschlussschaltungen zugeführte Signale zu dem eigentlichen Verarbeitungsteil der Datenvermittlungsanlage EDS weiterzuleiten bzw. von diesem Verarbeitungsteil her über die Anschlussschaltungen abzugebende Signale weiterzuleiten. Der Eingabe-/Ausgabe-Codewandler EACD ist dazu mit zwei Steuerleitungen Lm, Ln und einer Signalübertragungsleitung Lo mit einer Übertragungsablaufsteuerung UEAS der Datenvermittlungsanlage EDS verbunden. Diese Übertragungsablaufsteuerung UEAS ist ihrerseits mit einer Speichereinheit SE verbunden, die wiederum mit einer Programmsteuereinheit PE verbunden ist.

Im Zusammenhang mit der zuvor kurz erläuterten Datenvermittlungsanlage EDS sei noch angemerkt, dass in deren Speichereinheit SE jeder der mit den Anschlussschaltungen SAGD1 bis SAGDm verbundenen Zubringerleitungen – das sind die Anschlussleitungen, auf denen Signale zugeführt werden, die zu vermitteln sind – eine sogenannte Zubringerzelle individuell zugehörig ist. In die einer Zubringerleitung zugehörige Zubringerzelle der Speichereinheit SE wird im Zuge des Aufbaus einer Verbindung zu einer als Abnehmerleitung zu bezeichnenden Leitung – über die von der betreffenden Zubringerleitung zugeführte Signale weiterzuleiten sind – eine die betreffene Abnehmerleitung bezeichnende Abnehmeradresse eingetragen. Sind dann im Zuge der betreffenden Verbindung Signale von der erwähnten Zubringerleitung zu der gewünschten Abnehmerleitung weiterzuleiten, so wird über den Eingabe-/Ausgabe-Codewandler EACD eine den jeweiligen Signalübertragungswunsch angebende Meldung über die Steuerleitung Lm an die Übertragungsablaufsteuerung UEAS abgegeben. Die Übertragungsablaufsteuerung UEAS holt dann unter Heranziehung der die betreffende Zubringerleitung bezeichnenden Adresse aus der zugehörigen Zubringerzelle der Speichereinheit SE die Adresse der in Frage kommenden Abnehmerleitung ab. Diese Adresse gelangt dann über die Signalleitung Lo zusammen mit einem auf der Steuerleitung Ln auftretenden Steuersignal zu dem Eingabe-/Ausgabe-Codewandler EACD hin, der dann die Verbindung der erwähnten Zubringerleitung mit der in Frage kommenden Abnehmerleitung wirksam schaltet. Dabei können die von der jeweiligen Zubringerleitung zu der in Frage kommenden Abnehmerleitung zu übertragenden Signale entweder gewissermassen direkt weitergeleitet werden, also ohne vorherige Einspeicherung in die Speichereinheit SE, oder aber die betreffenden Signale können in der Speichereinheit SE vor ihrer Weiterleitung zwischengespeichert werden. Auf diese Vorgänge wird hier nicht weiter eingegangen, da sie bereits an anderer Stelle näher beschrieben worden sind (siehe «Siemens-Zeitschrift», Heft 2, 1977, Seiten 82 bis 87).

In Fig. 1 ist zusätzlich zu den zuvor erläuterten, zu der Datenvermittlungsanlage EDS gehörenden Einrichtungen noch eine gesonderte Koppeleinrichtung K vorgesehen, die lediglich über eine Steuerleitung Lc mit der Datenvermittlungsanlage EDS verbunden ist. Die Koppeleinrichtung K umfasst Anschlussschaltungen SAGK1 bis SAGKm, die eingangs- und ausgangsseitig mit einer Verbindungssteuerschaltung EACK verbunden sind. Diese Verbindungssteuerschaltung ist über die erwähnte Steuerleitung Lc mit der Übertragungsablaufsteuerung UEAS der Datenvermittlungsanlage EDS verbunden.

Die Koppeleinrichtung K, deren Aufbau und Arbeitsweise an anderer Stelle näher beschrieben werden, dient dazu, mit relativ hoher Übertragungsgeschwindigkeit, beispielsweise mit 64 kbit/s auftretende Datensignale zu vermitteln. Um diese Vermittlungsfunktion erfüllen zu können, enthält die Verbindungssteuerschaltung EACK unter anderem einen Durchschaltespeicher, in welchem für jede der an den Anschlussschaltungen SAGK1 bis SAGKm angeschlossenen Zubringerleitungen eine Zubringerzelle reserviert ist, in die die Adresse einer gewünschten Abnehmerleitung eintragbar ist. Im Grunde genommen entspricht die Verbindungssteuerschaltung EACK damit in ihrer Funktionsweise der Speichereinheit SE in Verbindung mit der Übertragungsablaufsteuerung UEAS und dem Eingabe/Ausgabe-Codewandler EACD der Datenvermittlungsanlage EDS. Im Zuge der Vermittlung von mit der relativ hohen Übertragungsgeschwindigkeit auftretenden Signalen über die Koppeleinrichtung K wird jedoch die Datenvermittlungsanlage EDS durch Inanspruchnahme von Speicher- bzw. Verarbeitungszyklen nicht belastet.

In Fig. 1 sind ferner Analog-Signale abgebende und aufnehmende Sende-/Empfangseinrichtungen Ta1 bis Tax angedeutet. Bei diesen Sende-/Empfangseinrichtungen kann es sich um analoge Fernsprechteilnehmerstationen handeln. Die betreffenden Sende-/Empfangseinrichtungen Ta1 bis Tax sind über Verbindungsleitungen La1 bis Lax an einer Multiplexer/Demultiplexer-Umsetzeinrichtung MD1 angeschlossen. Bei dieser Umsetzeinrichtung kann es sich beispielsweise um ein kommerziell unter der Bezeichnung PCM30F-KZU erhältliches Zeitmultiplex-System handeln, welches mit 30 Analog-Signale abgebenden Signalsendern und mit 30 Analog-Signale aufnehmenden Signalempfängern verbunden ist. Die von den betreffenden Signalsendern abgegebenen Analog-Signale werden in der betreffenden Umsetzeinrichtung in Digital-Signale umgesetzt. Darüber hinaus nimmt die betreffende Umsetzeinrichtung eine Trennung zwischen Nachrichtensignalen und Signalisierungsinformationen vor. Die von den einzelnen Signalsendern abgegebenen Analog-Signale können nämlich entweder Nachrichtensignale oder Signalisierungsinformationen darstellen. Die in digitale Form umgesetzten Nachrichtensignale werden dann in den einzelnen Signalsendern zugeteilten bzw. zugeordneten Nachrichten-Zeitkanälen übertragen, die in Pulsrahmen zyklisch wiederholt auftreten. Die in digitaler Form auftretenden Signalisierungsinformationen werden demgegenüber in einem einzigen Signalisierungs-Zeitkanal übertragen, und zwar in einem sogenannten Überrahmen verschachtelt.

Geht man beispielsweise von dem erwähnten Zeitmultiplex-System PCM30F-KZU aus, so sind in zyklisch wiederholt auftretenden Pulsrahmen mit einer Dauer von jeweils 125 µs insgesamt 32 Zeitkanäle enthalten. Innerhalb jedes Pulsrahmens treten dann 32 Zeitfächer auf, wobei die mit jeweils gleicher zeitlicher Lage in den aufeinanderfolgenden Pulsrahmen auftretenden Zeitfächer einen Zeitkanal bilden. Von den insgesamt vorhandenen 32 Zeitkanälen dient der Zeitkanal 1 für Synchronisierungszwecke, die folgenden 15 Zeitkanäle dienen als Nachrichten-Zeitkanäle, der 16. Zeitkanal dient als Signalisierungs-Zeitkanal, und die nachfolgenden 15 Zeitkanäle dienen wieder als Nachrichten-Zeitkanäle. In jedem Zeitfach der vorhandenen Zeitkanäle sind 8 Bits übertragbar – das ist die Länge eines PCM-Wortes. Während in den Nachrichten-Zeitkanälen bzw. in den diese bildenden Zeitfächern jeweils einem Nachrichtensignal zugehörige 8 Bits übertragen werden, stellen die in den Zeitfächern des Signalisierungs-Zeitkanals auftretenden 8 Bits eine Zusammenfassung von z.B. 4 Nachrichten-Zeitkanälen zugehörigen Signalisierungsbits dar. Dies bedeutet, dass in den Zeitfächern des Signalisierungs-Zeitkanals pro Pulsrahmen Signalisierungsinformationen für 4 Nachrichten-Zeitkanäle übertragbar sind, also pro Nachrichten-Zeitkanal zwei Signalisierungsbits. Da insgesamt 30 Nachrichten-Zeitkanäle vorhanden sind, bedeutet dies, dass für jeden Nachrichten-Zeitkanal Signalisierungsinformationen alle 8 Pulsrahmen – das ist ein sogenannter Überrahmen – übertragbar sind. Innerhalb der einen Überrahmen bildenden 8 Pulsrahmen liegen die Zuordnungen zwischen den jeweils auftretenden Signalisierungsinformationen und den Nachrichten-Zeitkanälen fest. So sind beispielsweise im ersten Pulsrahmen eines 8 Pulsrahmen umfassenden Überrahmens im 8 Bit breiten Zeitfach des Signalisierungs-Zeitkanals (das ist der Zeitkanal Nr. 16) jeweils zwei Signalisierungsinformationsbits für Verbindungen übertragbar, denen innerhalb desselben Pulsrahmens die den Nachrichten-Zeitkanälen Nr. 1, Nr. 2, Nr. 17 und Nr. 18 zugehörigen Zeitfächer zugeteilt bzw. zugeordnet sind. Im 8. Pulsrahmen des 8 Pulsrahmen umfassenden Überrahmens sind dann Signalisierungsbits übertragbar, die den Verbindungen zugehörig sind, bezüglich welcher Nachrichtensignale in Zeitfächern der Nachrichten-Zeitkanäle Nr. 13, Nr. 14, Nr. 31 und Nr. 32 übertragbar sind.

Wie aus der vorstehenden Betrachtung hervorgeht, sind auf der Seite der Sende-/Empfangseinrichtungen bzw. Teilnehmerstellen der Multiplexer/Demultiplexer-Umsetzeinrichtung MD1 30 Kanäle bzw. Übertragungsleitungen La1 bis Lax vorhanden, und auf der Übertragungsseite dieser Umsetzeinrichtung MD1 stehen 31 Übertragungskanäle zur Verfügung. In Fig. 1 ist die Übertragungsseite der Umsetzeinrichtung MD1 durch eine einzige Übertragungsleitung BL angedeutet; auch die Anschlussleitungen La1 bis Lax sind jeweils durch eine einzige Übertragungsleitung angedeutet. Dabei kann die Anordnung so getroffen werden, dass auf diesen Leitungen Duplexverkehr abgewickelt werden kann. Es ist aber auch möglich, die betreffenden Leitungen jeweils durch zwei Leitungen zu ersetzen, die für die Signalübertragung in unterschiedlichen Übertragungsrichtungen ausgenutzt sind.

Mit der Übertragungsleitung BL ist gemäss Fig. 1 eine Multiplexer/Demultiplexer-Einrichtung MD2 verbunden. Die Aufgabe dieser Multiplexer/Demultiplexer-Einrichtung MD2 besteht darin, die ihr über die Übertragungsleitung BL in einzelnen Zeitkanälen zugeführten Signale auf einzelne Leitungen zu verteilen und auf diesen bzw. entsprechenden einzelnen Leitungen auftretende Signale zusammenzufassen und über die Übertragungsleitung MD2 an die Multiplexer/Demultiplexer-Umsetzeinrichtung MD1 abzugeben. Für die Multiplexer/Demultiplexer-Einrichtung MD2 kann im übrigen auch eine kommerziell erhältliche Einrichtung verwendet werden, wie sie beispielsweise unter der Bezeichnung «System-Einsatz PCM30F-E&M» bekannt geworden ist.

Die Multiplexer/Demultiplexer-Einrichtung MD2 leitet die in den Nachrichten-Zeitkanälen auf der Übertragungsleitung BL auftretenden Nachrichtensignale über Leitungen Ld1 bis Ldx weiter. Die Anzahl dieser Leitungen entspricht somit der Anzahl der Sende-/Empfangseinrichtungen, die an der Multiplexer/Demultiplexer-Einrichtung MD1 angeschlossen sind. Die im Signalisierungs-Zeitkanal auf der Übertragungsleitung BL auftretenden Signalisierungsinformationen leitet die Multiplexer/Demultiplexer-Einrichtung MD2 über eine Leitung Ldy zu einer weiteren Multiplexer/Demultiplexer-Einrichtung MD3 hin, die eine ähnliche Aufgabe erfüllt wie die zuvor betrachtete Multiplexer/Demultiplexer-Einrichtung MD2. Diese Aufgabe läuft darauf hinaus, die in den innerhalb eines Überrahmens auftretenden Zeitfächern des Signalisierungs-Zeitkanals auftretenden Signalisierungsinformationen über einzelne Leitungen Ly1 bis Lyx an eine Signalumsetzungsanordnung SU weiterzuleiten. Unter Zugrundelegung der oben betrachteten Zahlenbeispiele ist die Multiplexer/Demultiplexer-Einrichtung MD3 über eine der Anzahl der Sende-/Empfangseinrichtungen bzw. Teilnehmerstellen Ta1 bis Tax entsprechende Anzahl – 30 – von Verbindungsleitungen mit der Signalumsetzungsanordnung SU verbunden.

Die Signalumsetzungsanordnung SU besteht im vorliegenden Fall aus einer Mehrzahl von Signalaufnahme- und Signalabgabeschaltungen SU1 bis SUx, die eine Umsetzung der Signalisierungsinformationen vornehmen. Wie oben bereits ausgeführt, ist eine solche Umsetzung der Signalisierungsinformationen erforderlich, da die von den Teilnehmerstellen (Sendeeinrichtungen) Ta1 bis Tax abgegebenen Signalisierungsinformationen auch nach ihrer Umsetzung in eine digitale Form nicht ohne weiteres von der Art sind, wie die Signalisierungsinformationen, welche die Datenvermittlungsanlage EDS zu verarbeiten im Stande ist.

Die Signalumsetzungsanordnung SU ist über einzelne Verbindungsleitungen Lz1 bis Lzx an Anschlussschaltungen, wie die Anschlussschaltung SAGD1 der Datenvermittlungsanlage EDS angeschlossen. Über diese Anschlussschaltungen werden dann die betreffenden Signalisierungsinformationen dem eigentlichen Verarbeitungsbereich der Datenvermittlungsanlage EDS zugeführt. Handelt es sich bei der betreffenden Signalisierungsinformation um eine Wahlinformation, so wird daraufhin durch die Datenvermittlungsanlage EDS die gewünschte Verbindung zu der in Frage kommenden Empfangseinrichtung hergestellt. Im einzelnen stellt dazu die Datenvermittlungsanlage EDS eine eine Abnehmerleitung bezeichnende Adresse bereit, die in der der in Frage kommenden Zubringerleitung zugehörigen Zubringerzelle der Speichereinheit SE eingetragen wird. Ist beispielsweise eine Verbindung zwischen den beiden in Fig. 1 angedeuteten Teilnehmerstellen Ta1 und Tax herzustellen, so wird in der der Leitung Lz1 als einer Zubringerleitung zugehörigen Zubringerzelle innerhalb der Speichereinheit SE die Adresse der eine Abnehmerleitung darstellenden Leitung Lzx eingetragen. Um in diesem Fall Signalisierungsinformationen von der Sendeeinrichtung der Teilnehmerstelle Ta1 zu der Empfangseinrichtung der Teilnehmerstelle Tax übertragen zu können, muss die Signalumsetzungsanordnung SU auch für eine Signalübertragung von der Datenvermittlungsanlage EDS zu der Multiplexer/Demultiplexer-Einrichtung MD3 hin ausgelegt sein. In Fig. 1 ist dies dadurch zum Ausdruck gebracht, dass die Leitungen, über die die Signalumsetzungsanordnung SU mit der Datenvermittlungsanlage EDS einerseits und mit der Multiplexer/Demultiplexer-Einrichtung MD3 andererseits verbunden ist, mit Doppelpfeilen versehen sind. Die Multiplexer/Demultiplexer-Einrichtung MD3 vermag im übrigen die ihr so zugeführten Signalisierungsinformationen über die Leitung Ldy an die Multiplexer/Demultiplexer-Einrichtung MD2 abzugeben, von der die betreffenden Signalisierungsinformationen dann über den oben bereits erwähnten Signalisierungs-Zeitkanal zu der Multiplexer/Demultiplexer-Umsetzeinrichtung MD1 weitergeleitet werden, in der dann eine Verteilung der Signalisierungsinformationen zu den in Frage kommenden Empfangseinrichtungen bzw. Teilnehmerstellen hin erfolgt.

In der zuvor geschilderten Art und Weise ist es somit möglich, Signalisierungsinformationen, die in Form von Analog-Signalen von einer Sendeeinrichtung, beispielsweise von der Sendeeinrichtung der Teilnehmerstelle Ta1 abgegeben werden, der Empfangseinrichtung der Teilnehmerstelle Tax ebenfalls als Analog-Signale zuzuführen. Zusätzlich zu einer solchen Signalübertragung können zwischen den betreffenden Teilnehmerstellen aber auch Nachrichtensignale übertragen werden. Wie oben bereits erwähnt, werden die von der Sendeeinrichtung einer Teilnehmerstelle in Form von Analog-Signalen abgegebenen Nachrichtensignale nach Digitalisierung in einem dieser Teilnehmerstelle zugeteilten oder zugeordneten Nachrichten-Zeitkanal von der Multiplexer/Demultiplexer-Umsetzeinrichtung MD1 an die Multiplexer/Demultiplexer-Einrichtung MD2 abgegeben. Von dieser Einrichtung werden die digitalen Nachrichtensignale dann über eine der Leitungen Ld1 bis Ldx weitergeleitet, um nach Vermittelung in der Koppeleinrichtung K über eine der anderen Leitungen dieser Leitungen Ld1 bis Ldx wieder abgegeben zu werden.

Um die zuletzt erwähnte Vermittlungsaufgabe durchführen zu können, sind in dem Durchschaltespeicher der Verbindungssteuerschaltung EACK entsprechende Einstellinformationen bereitzuhalten. Wie oben bereits erwähnt, ist der Durchschaltespeicher der Verbindungssteuerschaltung EACK so ausgelegt, dass in ihm für jede der mit der Koppeleinrichtung K verbundenen Zubringerleitungen eine Zubringerzelle reserviert ist, in welche eine Adresse einschreibbar ist, die die für die jeweilige Verbindung in Frage kommende Abnehmerleitung bezeichnet. Bei dieser Adresse kann es sich um die gleiche Adresse handeln, die auch für die betreffende Verbindung in der Speichereinheit SE abgespeichert worden ist, wie dies zuvor erläutert worden ist. Die betreffende Adresse wird der Verbindungssteuerschaltung EACK über die Leitung Lc vorzugsweise zum selben Zeitpunkt zugeführt, zu dem diese Adresse in eine Zubringerzelle der Speichereinheit SE eingeschrieben wird.

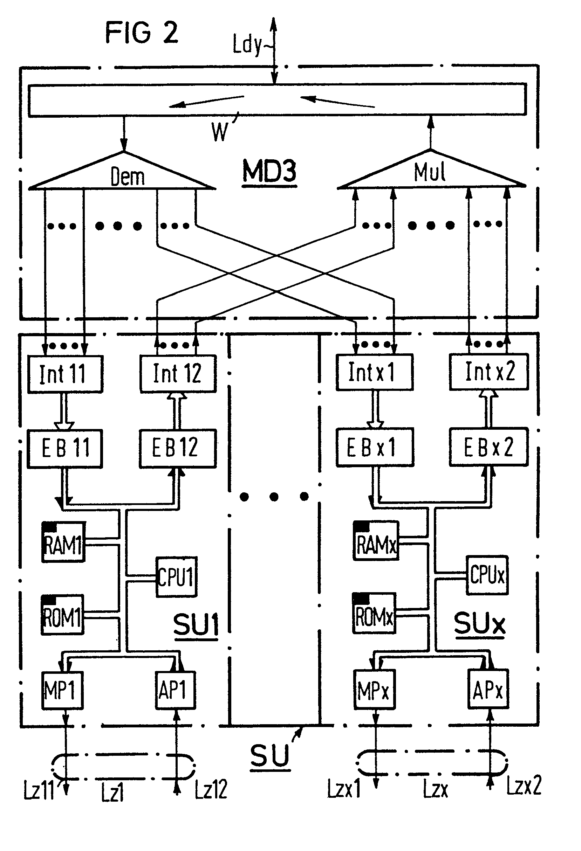

Nachdem zuvor der Aufbau der in Fig. 1 dargestellten Anlage erläutert worden ist, seien nunmehr noch die in Fig. 2 dargestellten Schaltungsteile betrachtet. Gemäss Fig. 2 ist die Multiplexer/Demultiplexer-Einrichtung MD3 aus einem Multiplexer Mul und einem Demultiplexer Dem aufgebaut. Der Multiplexer Mul ist ausgangsseitig über eine Weichenschaltung W mit der im Zusammenhang mit Fig. 1 bereits erwähnten Leitung Ldy verbunden. Der Demultiplexer Dem ist eingangsseitig über diese Weichenschaltung ebenfalls mit der betreffenden Leitung Ldy verbunden. Es ist jedoch auch möglich, unter Weglassung der Weichenschaltung W getrennte Übertragungswege für den Multiplexer und den Demultiplexer vorzusehen.

In Fig. 2 ist ferner die Signalumsetzungsanordnung SU näher gezeigt. Im einzelnen ist der Aufbau zweier auch als Signalaufnahme- und Signalabgabeschaltung zu bezeichnender Signalumsetzer SU1 und SUx angedeutet.

Die Signalaufnahme- und Signalabgabeschaltung SU1 enthält als Steuereinrichtung einen Mikroprozessor CPU1, der zusammen mit einem Arbeitsspeicher RAM1 und einem Programmspeicher ROM1 an einem nicht näher dargestellten Busleitungssystem angeschlossen ist. An diesem Busleitungssystem sind ferner Datenbehandlungsschaltungen EB11 und EB12 angeschlossen, deren Aufgabe darin besteht, die zugeführten Signale von gegebenenfalls mit diesen übertragenen Zusatzzeichen zu befreien bzw. solche Zusatzzeichen hinzuzufügen. Treten solche Zusatzzeichen nicht auf, so können die betreffenden Datenbehandlungsschaltungen auch weggelassen sein.

Mit den Datenbehandlungsschaltungen oder direkt mit dem erwähnten Busleitungssystem sind gemäss Fig. 2 Schnittstellenschaltungen Int11 und Int12 verbunden. Über diese Schnittstellenschaltungen ist die Signalaufnahme- und Signalabgabeschaltung SU1 zum einen mit der Ausgangsseite des Demultiplexers Dem und zum anderen mit der Eingangsseite des Multiplexers Mul verbunden. Jede derartige Verbindung kann beispielsweise 8 einzelne Leitungen umfassen.

Neben den zuvor erläuterten Einrichtungen weist die Signalaufnahme- und Signalabgabeschaltung SU1 noch einen Meldepuffer MP1 und einen Auftragspuffer AP1 auf. Diese beiden Puffer sind eingangs- bzw. ausgangsseitig ebenfalls mit dem Busleitungssystem verbunden.

Der Meldepuffer MP1 ist ausgangsseitig mit einer Meldeleitung Lz11 verbunden, die als Teil der Anschlussleitung Lz1 mit einer Anschlussschaltung (SAGD1) der Datenvermittlungsanlage EDS gemäss Fig. 1 verbunden ist. Der Auftragspuffer AP1 ist eingangsseitig über eine zu der Anschlussleitung Lz1 gehörenden Auftragsleitung Lz12 ebenfalls an einer Anschlussschaltung (SAGD1) der Datenvermittlungsanlage EDS angeschlossen. Über die zuletzt erwähnten beiden Leitungen tauscht die Signalaufnahme- und Signalabgabeschaltung SU1 Signale mit der Datenvermittlungsanlage EDS aus.

Die in Fig. 2 noch dargestellte Signalaufnahme- und Signalabgabeschaltung SUx ist in gleicher Weise aufgebaut wie die zuvor betrachtete Signalaufnahme- und Signalabgabeschaltung SU1. Demgemäss ist als Steuereinrichtung ein Mikroprozessor CPUx vorgesehen, der über ein Busleitungssystem mit einem Arbeitsspeicher RAMx, einem Programmspeicher ROMx, mit Datenbehandlungsschaltungen EBx1, EBx2 sowie mit einem Meldepuffer MPx und einem Auftragspuffer APx verbunden ist. Die beiden Datenbehandlungsschaltungen sind über Schnittstellenschaltungen Intx1 bzw. Intx2 mit der Ausgangsseite des Demultiplexers Dem bzw. mit der Eingangsseite des Multiplexers Mul verbunden, der Meldepuffer MPx ist über eine zu der Anschlussleitung Lzx gehörende Meldeleitung Lzx1 mit einer Anschlussschaltung der Datenvermittlungsanlage EDS gemäss Fig. 1 verbunden. Der Auftragspuffer APx ist über eine entsprechende Auftragsleitung Lzx2 mit der Datenvermittlungsanlage EDS verbunden.

Die in Fig. 2 näher dargestellte Signalumsetzungsanordnung SU dient dazu, die von den Sendeeinrichtungen gemäss Fig. 1 zunächst in analoger Form abgegebenen und dann in eine digitale Form umgesetzten Signalisierungsinformationen so umzusetzen, dass diese Signalisierungsinformationen von der Datenvermittlungsanlage EDS auch verarbeitet werden können. Zum anderen dient die Signalumsetzungsanordnung SU dazu, von der Datenvermittlungsanlage EDS ihr zugeführte Signalisierungsinformationen so umzusetzen, dass die dann vorliegenden Signalisierungsinformationen nach Umsetzung in eine analoge Form die gewünschten Aufgaben bei den Empfangseinrichtungen gemäss Fig. 1 ausführen können. Um diese Umsetzungsfunktion erfüllen zu können, werden in der jeweiligen Signalaufnahme- und Signalabgabeschaltung sogenannte Tabellensuchvorgänge ausgeführt. Zu diesem Zweck sind in der jeweiligen Signalaufnahme- und Signalabgabeschaltung die einander korrespondierenden Signalisierungsinformationen festgehalten, beispielsweise in dem Speicher RAM1. Tritt nun eine derartige Signalisierungsinformation auf, so kann der zugehörige Mikroprozessor der betreffenden Signalaufnahme- und Signalabgabeschaltung anhand dieser Signalisierungsinformation die damit übereinstimmende festgehaltene Signalisierungsinformation ermitteln, um daraufhin dann die damit korrespondierende andere Signalisierungsinformation für eine Weiterleitung bereitzustellen. Für die Durchführung des Suchvorgangs bzw. des damit verbundenen Vergleichs kann das in dem Mikroprozessor enthaltene Rechen- und Verknüpfungswerk (ALU) herangezogen werden.

Im Hinblick auf die in Fig. 2 dargestellte Anordnung sei abschliessend noch angemerkt, dass für die geschilderte Aufnahme, Umsetzung und Abgabe von Signalisierungsinformationen, die 30 verschiedenen Nachrichtenverbindungen zugehörig sind, beispielsweise mit 4 Signalaufnahme-Signalabgabeschaltungen der erläuterten Art ausgekommen werden kann. Dabei kann eine solche Aufteilung vorgenommen sein, dass zwei derartige Signalaufnahme-Signalabgabeschaltungen jeweils die 8 Nachrichtenverbindungen zugehörigen Signalisierungsinformationen aufnehmen, umsetzen und abgeben, und dass die beiden anderen Signalaufnahme-Signalabgabeschaltungen die Signalisierungsinformationen für jeweils 7 Nachrichtenverbindungen aufnehmen, umsetzen und abgeben.

Abschliessend sei nochmals auf das oben gegebene Zahlenbeispiel zurückgekommen. Gemäss diesem Zahlenbeispiel umfasst jeder der auf der Übertragungsleitung BL massgebenden Pulsrahmen 32 Zeitfächer, die jeweils 8 Bits umfassen. Für jeden Nachrichtensignal-Zeitkanal ergibt dies eine Übertragungsgeschwindigkeit von 64 kbit/s (8 Bit · 8 kHz Pulsrahmenfrequenz). Werden in den Nachrichten-Zeitkanälen Sprachsignale in Form von PCM-Signalen übertragen, so können somit Sprachsignale mit einer maximalen Frequenz von etwa 4 kHz berücksichtigt werden, die von den Teilnehmerstellen vorzugsweise in Form von PAM-Signalen bereitgestellt bzw. von diesen aufgenomemn werden. Die Übertragung der Signalisierungsinformationen pro Verbindung erfolgt mit demgegenüber geringerer Übertragungsgeschwindigkeit. Geht man einmal davon aus, dass die 8 Bits im jeweiligen Zeitfach des Signalisierungs-Zeitkanals auf 4 Verbindungen bezogen sind – was zwei Bits pro Verbindung bedeutet – so beträgt die Dauer des auch als Signalisierungszeichen-Pulsrahmen zu bezeichnenden Überrahmens 1 ms, was einer Übertragungsgeschwindigkeit von 2 kbit/s für die je Verbindung zu übertragenden Signalisierungsinformationen entspricht (eine Überrahmendauer von 1 ms entspricht einer Überrahmen-Folgefrequenz von 1 kHz; 1 kHz · 2 Bits ergibt 2 kbit/s). Den gleichen Übertragungsgeschwindigkeitswert erhält man im übrigen auch dann, wenn man innerhalb jedes Zeitfaches des Signalisierungs-Zeitkanals Signalisierungsinformationen für zwei Verbindungen überträgt, also pro Verbindung 4 Bits. In diesem Fall beträgt dann die Überrahmendauer 2 ms, was einer Überrahmenfolgerate von 500 Hz entspricht.

**Patentansprüche**

1. Schaltungsanordnung zum Verbinden von Analog-Signale abgebenden Sendeeinrichtungen (Ta1 bis Tax) mit Analog-Signale aufnehmenden Empfangseinrichtungen (Tax bis Ta1) über eine Zeitmultiplex-Datenvermittlungsanlage (EDS), über die mit relativ niedriger Geschwindigkeit auftretende Datensignale und Signalisierungsinformationen vermittelbar sind und der eine gesonderte Koppeleinrichtung (K) zugeordnet ist, über die mit relativ hoher Geschwindigkeit auftretende Datensignale vermittelbar sind und die dazu von einer Steuereinrichtung (UEAS, SE, PE) der Zeitmultiplex-Datenvermittlungsanlage (EDS) steuerbar ist, wobei die Sendeeinrichtungen (Ta1 bis Tax) und die Empfangseinrichtungen (Tax bis Ta1) jeweils gruppenweise über Multiplexer/Demultiplexer-Umsetzeinrichtungen (MD1, MD2) zusammengefasst sind, deren jede zum einen ihr zugeführte analoge Nachrichtensignale in digitale Nachrichtensignale umsetzt und diese über den Sendeeinrichtungen (Ta1 bis Tax) zugeteilte bzw. zugeordnete, zyklisch wiederholt in Pulsrahmen auftretende Nachrichten-Zeitkanäle abgibt, zum anderen die ihr in den betreffenden Nachrichten-Zeitkanälen zugeführten digitalen Nachrichtensignale in analoge Nachrichtensignale umsetzt und diese an die mit ihr verbundenen Empfangseinrichtungen abgibt und ausserdem in sämtlichen ihr zugeführten Analog-Signalen enthaltene Signalisierunginformationen nach Umsetzen in eine digitale Form in einem gesonderten Signalisierungs-Zeitkanal abgibt bzw. in dem betreffenden Signalisierungs-Zeitkanal ihr zugeführte digitale Signalisierungsinformationen in analoge Signalisierungsinformationen umsetzt und diese an die jeweils in Frage kommende Empfangseinrichtung (Tax bis Ta1) der an ihr angeschlossenen Empfangseinrichtungen (Tax bis Ta1) abgibt, dadurch gekennzeichnet, dass der Signalisierungs-Zeitkanal über eine gesonderte Signalumsetzanordnung (SU) lediglich an der Zeitmultiplex-Datenvermittlungsanlage (EDS) angeschlossen ist und dass mit der von der Zeitmultiplex-Datenvermittlungsanlage (EDS) her gesteuerten gesonderten Koppeleinrichtung (K) lediglich die Nachrichten-Zeitkanäle verbunden sind.

2. Schaltungsanordnung nach Anspruch 1, dadurch gekennzeichnet, dass die Signalumsetzungsanordnung (SU) eine durch wenigstens einen Mikroprozessor (z.B. CPU1) gesteuerte Signalaufnahme- und Signalabgabeschaltung (z.B. SU1) enthält, in der die von der jeweiligen Multiplexer/Demultiplexer-Umsetzeinrichtung (MD1, MD2) bzw. von der Zeitmultiplex-Datenvermittlungsanlage (EDS) abgegebenen Signalisierungsinformationen vor ihrer Weiterleitung in von der Zeitmultiplex-Datenvermittlungsanlage (EDS) bzw. den mit der Multiplexer/Demultiplexer-Umsetzeinrichtung (MD1, MD2) verbundenen Empfangseinrichtungen (Ta1 bis Tax) verarbeitbare Signalisierungsinformationen umgesetzt werden.

3. Schaltungsanordnung nach Anspruch 2, dadurch gekennzeichnet, dass in der jeweiligen Signalaufnahme- und Signalabgabeschaltung (z.B. SU1) ein Speicher (z.B. RAM1) vorgesehen ist, in welchem die Zuordnungen zwischen den verschiedenen Signalisierungsarten zugehörigen Signalisierungsinformationen gespeichert sind, und dass dieser Speicher (RAM1) im Zuge der jeweiligen Signalisierungsumsetzung in einen Tabellensuchvorgang einbezogen wird, durch den der eine vorliegende Signalisierungsinformation enthaltende Speicherbereich ansteuerbar ist und durch den die in diesem Speicherbereich enthaltene, der betreffenden Signalisierungsinformation entsprechende andere Signalisierungsinformation für eine Weiterleitung bereitgestellt wird.

4. Schaltungsanordnung nach einem der Ansprüche 1 bis 3, dadurch gekennzeichnet, dass mit der Signalumsetzungsanordnung (SU) eine Multiplexer/Demultiplexer-Einrichtung (MD3) verbunden ist, welche die in dem Signalisierungs-Zeitkanal zeitlich verschachtelt zugeführten, den einzelnen Signalsendern bzw. Signalempfängern zugehörigen Signalisierungsinformationen vor deren Umsetzung über einzelne Leitungen (Ly1 bis Lyx) abgibt und die ihr über einzelne Leitungen zugeführte umgesetzte Signalisierungsinformationen zeitlich verschachtelt über den Signalisierungs-Zeitkanal weiterleitet.

5. Schaltungsanordnung nach einem der Ansprüche 1 bis 4, dadurch gekennzeichnet, dass die Nachrichten-Zeitkanäle und der Signalisierungs-Zeitkanal jeweils zwei Teilkanäle umfassen.

## Claims

1. A circuit arrangement for connecting transmitting devices (Ta1 to Tax), which emit analogue signals, to receiving devices (Tax to Ta1), which receive analogue signals, via a t.d.m. data switching system (EDS) via which data signals which occur at a relatively low speed and items of signalling information can be switched, and which is assigned a special coupling device (K) via which data signals occurring at a relatively high speed can be switched and which for this purpose can be controlled by a control device (UEAS, SE, PE) of the t.d.m. data switching system (EDS), where the transmitting devices (Ta1 to Tax) and the receiving devices (Tax to Ta1) are in each case combined in groups via multiplexer-demultiplexer converters (MD1, MD2), each of which on the one hand converts analogue message signals with which it is supplied into digital message signals which it emits via message time channels which are allocated or assigned to the transmitting devices (Ta1 to Tax) and which occur in cyclic repetition in pulse frames, and on the other hand converts the digital message signals, with which it is supplied in the relevant message time channels, into analogue message signals which it emits to the receiving devices to which it is connected, and also emits, in a special signalling time channel, items of signalling information contained in all the analogue signals with which it is supplied, following their conversion into digital form, and similarly converts items of digital signalling information, with which it is supplied in the relevant signalling time channel, into items of analogue signalling information which it emits to the relevant receiving device (Tax to Ta1) of those receiving devices (Tax to Ta1) to which it is connected, characterised in that the signalling time channel is connected via a special signal converter arrangement (SU) only to the t.d.m. data switching system (EDS), and that the special coupling device (K) which is controlled by the t.d.m. data switching system (EDS) is connected only to the message time channels.

2. A circuit arrangement as claimed in claim 1, characterised in that the signal converter arrangement (SU) includes a signal receiving and emitting circuit (e.g. SU1) which is controlled by at least one microprocessor (e.g. CPU1) and in which the items of signalling information which are emitted from the relevant multiplexer/demultiplexer converter (MD1, MD2) and from the t.d.m. data switching system (EDS) are converted, prior to being forwarded, into items of signalling information which can be processed by the t.d.m. data switching system (EDS) and by the receiving devices (Ta1 to Tax) which are connected to the multiplexer/demultiplexer converter (MD1, MD2).

3. A circuit arrangement as claimed in claim 2, characterised in that the relevant signal receiving and emitting circuit (e.g. SU1) includes a store (e.g. RAM1) which stores the assignments between items of signalling information allocated to the various types of signalling, and that in the course of the relevant signalling conversion process this store (RAM1) participates in a table look-up procedure by which it is possible to drive that store zone which contains a relevant item of signalling information and by which the other item of signalling information, which is contained in this store zone and which corresponds to the item of signalling information in question, is made available for forwarding.

4. A circuit arrangement as claimed in one of the claims 1 to 3, characterised in that the signal converter arrangement (SU) is connected to a multiplexer/demultiplexer (MD3) which emits, via individual lines (Ly1 to Lyx), the items of signalling information supplied in a timeinterleaved arrangement in the signalling time channel and assigned to the individual signal transmitters and signal receivers before said items of signalling information are converted, and which forwards the converted items of signalling information, with which it is supplied via individual lines, in a timeinterleaved arrangement via the signalling time channel.

5. A circuit arrangement as claimed in one of the claims 1 to 4, characterised in that the message time channels and the signalling time channel each comprise two sub-channels.

**Revendications**

1. Montage pour relier des dispositifs (Ta1 à Tax) émettant des signaux analogiques avec des dispositifs de réception (Tax à Ta1) recevant des signaux analogiques par l'intermédiaire d'une installation de commutation de données (EDS) à multiplexage temporel, à l'aide de laquelle sont comutables des signaux de données et des informations de signalisation qui apparaissent avec des vitesses relativement faibles et auxquels est associé un dispositif de couplage particulier (K) à l'aide duquel sont commutables les signaux de données qui apparaissent avec une vitesse relativement élevée et qui sont, à cet effet, susceptibles d'être commandés par un dispositif de commande (UEAS, SE, PE) de l'installation de commutation des données à multiplexage temporel (EDS), du type dans lequel les dispositifs d'émission (Ta1 à Tax) et les dispositifs de réception (Tax à Ta1) sont rassemblés respectivement en groupes par l'intermédiaire de dispositifs convertisseurs mutliplexeurs/démultiplexeurs (MD1, MD2) dont chacun convertit, d'une part les signaux analogiques d'informations qui lui sont apliqués en signaux d'informations numériques et les émet par l'intermédiaire de canaux temporels d'informations qui se répètent cycliquement, qui apparaissent sous la forme de trames d'impulsions et qui sont attribués à ou associés aux dispositifs d'émission (Ta1 à Tax), et, d'autre part les signaux d'informations numériques qui lui sont appliqués dans les canaux temporels d'informations concernés en signaux d'informations analogiques et les transmet aux dispositifs de réception qui lui sont reliés, et qui transmet, en outre, toutes les informations de signalisations qui lui sont transmises et qui contiennent des signaux analogiques, après transformation sous une forme numérique, dans un canal temporel particulier de signalisation, ou convertit les informations de signalisation numériques qui lui sont appliquées dans le canal temporel de signalisation concerné, en informations de signalisation analogiques et transmet celles-ci au dispositif de réception concerné (Tax à Ta1) des dispositifs de réception (Tax à Ta1) qui lui sont reliés, caractérisé par le fait que le canal temporel de signalisation est relié, par l'intermédiaire d'un dispositif de conversion des signaux particulier (SU), uniquement à l'installation de commutation des données à multiplexage temporel (EDS), et qu'au dispositif de couplage particulier (K), commandé par l'installation de commutation des données à multiplexage temporel (EDS), sont reliés seulement les canaux temporels d'informations.

2. Montage selon la revendication 1, caractérisé par le fait que le dispositif de conversion des signaux (SU) comporte un circuit de réception de signaux et d'émission de signaux (par exemple SU1) commandé par au moins un microprocesseur (par exemple CPU1), circuit dans lequel les informations de signalisation qui sont émises par le dispositif de conversion multiplexeur/démultiplexeur concerné (MD1, MD2) ou par l'installation de commutation de données à multiplexage temporel (EDS), sont converties, avant leur retransmission, en informations de signalisation susceptibles d'être traitées par l'installation de commutation de données à multiplexage temporel ou par les dispositifs de réception (Ta1 à Tax) reliés au dispositif de conversion multiplexeur/démultiplexeur (MD1, MD2).

3. Montage selon la revendication 2, caractérisé par le fait qu'il est prévu dans le circuit de réception des signaux et d'émission de signaux (par exemple SU1) une mémoire (par exemple RAM1) dans laquelle sont mémorisées les coordinations entre les informations de signalisation qui appartiennent aux différents genres de signalisations, et que cette mémoire (RAM1) est introduite, au cours de la conversion de signalisation qui a lieu, dans une opération de recherche de tableau, par laquelle est susceptible d'être attaquée la zone de mémoire qui contient une information de signalisation qui est présente, et par laquelle est préparée, pour une retransmission, l'autre information de signalisation correspondante de l'information de signalisation concernée et qui est contenue dans cette zone de mémoire.

4. Montage selon l'une des revendications 1 à 3, caractérisé par le fait qu'au dispositif de conversion des signaux (SU) est relié un dispositif multiplexeur/démultiplexeur (MD3) qui émet par l'intermédiaire de diverses lignes (Ly1 à Lyx), et avant leur conversion, les informations de signalisation envoyées avec imbrication temporelle dans le canal temporel de signalisation et appartenant aux différents émetteurs et récepteurs de signaux, et qui retransmet par le canal temporel de signalisation, et avec imbrication temporelle, des informations de signalisation qui lui sont envoyées par l'intermédiaire des diverses lignes.

5. Montage selon l'une des revendications 1 à 4, caractérisé par le fait que les canaux temporels d'informations et le canal temporel de signalisation comportent chacun deux canaux partiels.

# FIG 1

# FIG 2